# EUROPEAN PATENT APPLICATION

(11) **EP 4 711 419 A1**
(43) Date of publication of application: **18.03.2026**
(21) Application number: 25197560.3
(22) Date of filing: 22.08.2025
(51) Int. Cl.: C08L 83/04, H01M 10/658, C08G 77/12

(54) **FILLER COMPOSITION AND BATTERY ASSEMBLY INCLUDING THE SAME**

(30) Priority: 26.08.2024 KR 20240113965
(71) Applicant: SK On Co., Ltd., Seoul 03161 (KR)
(72) Inventor: BAEK, Seung Ran, 34124 Daejeon (KR); LEE, Gang U, 34124 Daejeon (KR)
(74) Representative: Prüfer & Partner mbB Patentanwälte · Rechtsanwälte

(57) **Abstract**

Disclosed is a filler composition including a silicone polymer and at least one of a filling material and/or a catalyst. A battery assembly capable of delaying or preventing thermal runaway and/or thermal diffusion is also provided. The battery assembly can be a battery module or a battery pack. Further disclosed is a vehicle comprising at least one such battery module or battery pack.

## Description

### BACKGROUND OF THE DISCLOSURE

### Field of the Disclosure

The present disclosure relates to a filler composition and a battery assembly including the same.

### Description of the Related Art

Secondary batteries, which offer the advantages of high energy density and long lifespan, can be applied to various fields, including mobile devices, electric vehicles (EVs), hybrid electric vehicles (HEVs), energy storage systems (ESS).

As demand for electric vehicles has increased recently, the need for safety from fire has also increased significantly. Electric vehicles store a lot of energy and are equipped with a large number of batteries that are vulnerable to fire, so if the batteries are damaged due to a vehicle defect or accident, there is a high likelihood of a large-scale fire occurring. Accordingly, the need for measures to protect passengers from fires that may occur while driving electric vehicles is increasing.

Battery fires are most often caused by thermal runaway. Thermal runaway occurs when the energy released during a temperature rise accelerates the temperature rise even further. Thermal runaway in batteries may occur for various reasons, such as battery defects, external impact, overcharging, over discharging, etc. Efficient control of heat (temperature) is important to prevent or delay battery thermal runaway.

A filler is a material that fills the tiny gaps inside electronic parts such as batteries, etc. By injecting a filler into a battery assembly, thermal diffusion between parts may be inhibited, and thus the filler may play a role in preventing or delaying thermal runaway in the battery.

### SUMMARY

An aspect of the present disclosure is to provide a filler composition capable of ensuring insulation performance of a battery and improving thermal runaway and/or thermal diffusion delay and/or prevention performance of a battery.

Another aspect of the present disclosure is to provide a battery assembly including the filler composition.

Still, another aspect of the present disclosure is to provide a vehicle including the battery assembly.

The filler composition of the present disclosure and the battery assembly including the same may be widely applied in green technology fields such as electric vehicles, battery charging stations, and other solar power generators and wind power generators using batteries. In addition, the filler composition of the present disclosure and the battery assembly including the same may be used in eco-friendly electric vehicles, hybrid vehicles, etc., to prevent climate change by suppressing air pollution and greenhouse gas emissions.

An embodiment of the present disclosure provides a filler composition including a silicone polymer and at least one of a filling material and/or a catalyst, in which the silicone polymer includes any one, or a combination of two or more selected from a group consisting of polydimethylsiloxane, polymethylhydrosiloxane, and polymethylphenylsiloxane.

According to an embodiment, the filling material may include a ceramic filler, and the catalyst may include at least one selected from among platinum group metal-based catalysts.

According to an embodiment, an amount of the silicone polymer may be 40 to 90 wt% based on a total weight of the filler composition.

According to an embodiment, an amount of the filling material may be 60 wt% or less based on a total weight of the filler composition.

According to an embodiment, the amount of the catalyst may be 10 wt% or less based on a total weight of the filler composition.

According to an embodiment, the catalyst may be a catalyst for foaming.

According to an embodiment, the filler composition may further include a flame retardant, and the flame retardant may be a fiber filler.

According to an embodiment, viscosity of the filler composition according to ASTM D2196 may be 500 cP or more.

In another embodiment of the present disclosure provides a method for producing a cured filler composition, may include injecting the filler composition into a battery assembly, and curing the filler composition within predetermined time after injection.

According to an embodiment, wherein the curing step of the filler composition, which may include the catalyst for foaming, may include foaming of the filler composition, and curing the foamed filler composition within about 25 minutes after injection. The foaming of the filler composition may be initiated in the battery assembly. A volume of the filler composition after foaming may be less than 10 times a volume of the filler composition before foaming, and the foamed filler composition may be cured within about 25 minutes.

In still another embodiment of the present disclosure provides a battery assembly may include a battery housing, at least one battery cell assembly may be disposed inside the battery assembly, and a cured filler composition may be disposed between an inner wall of the battery assembly and the at least one battery cell assembly. The cured filler composition may include a silicone polymer and at least one of a filling material and/or a catalyst.

According to an embodiment, when the battery assembly is a battery module, the at least one battery cell assembly may be disposed inside the battery module, the battery housing may be a module case including a module upper case, a module lower case, and an end plate, and the cured filler composition may be disposed between an inner wall of the battery module and the at least one battery cell assembly.

According to an embodiment, the battery module may include a module terrace, the cured filler composition may be disposed in the module terrace, and the module terrace may be a space between a cell tab or an electrode lead protrusion of at least one battery cell provided in the at least one battery cell assembly and an insulating cover.

According to an embodiment, when the battery assembly may be a battery pack, the at least one battery cell assembly may be disposed inside the battery pack, the battery housing may include a pack case and at least one partition wall, the pack case may include a pack upper case and a pack lower case, and the cured filler composition may be disposed among an inner wall of the battery pack, the partition wall, and the at least one battery cell assembly.

According to an embodiment, the battery pack may include a pack terrace, the cured filler composition may be disposed in the pack terrace, and the pack terrace may be a space between an electrode lead protrusion of at least one battery cell provided in the at least one battery cell assembly and an insulating cover or the partition wall.

According to an embodiment, thermal conductivity of the cured filler composition according to ISO-22007-2 may be less than 1.5 W/mK.

Another embodiment of the present disclosure provides a vehicle including at least one battery module or a battery pack, which may include a cured filler composition. The filler composition may include a silicone polymer and at least one of a filling material and/or a catalyst, in which the silicone polymer includes any one, or a combination of two or more selected from a group consisting of polydimethylsiloxane, polymethylhydrosiloxane, and polymethylphenylsiloxane.

Still, another embodiment of the present disclosure provides a vehicle including at least one battery module or a battery pack, which includes the filler composition.

### BRIEF DESCRIPTION OF THE DRAWINGS

The above and other aspects, features, and other advantages of the present disclosure will be more clearly understood from the following detailed description taken in conjunction with the accompanying drawings, in which:
FIG. 1 is a perspective view of a partially assembled battery module according to an embodiment of the present disclosure;
FIG. 2 is a cross-sectional view showing a portion of a cross-section taken along line A-A' of the battery module shown in FIG. 1;
FIG. 3 is a cross-sectional view showing a state in which a filler composition is injected into the partially assembled battery module shown in FIG. 2 with a module lower case further assembled according to an embodiment of the present disclosure;
FIG. 4 is a graph showing a thermal runaway delay effect of a battery module that does not include the filler composition according to an embodiment of the present disclosure;
FIG. 5 is a graph showing a thermal runaway delay effect of a battery module including the filler composition according to an embodiment of the present disclosure; and
FIG. 6 is a battery pack according to an embodiment of the present disclosure.

### DETAILED DESCRIPTION

In the present disclosure, a battery cell assembly may mean a set of at least one battery cell.

In the present disclosure, a battery assembly may mean that at least one battery cell, battery cell assembly, battery module, or battery pack is bundled in a certain number and placed in a frame to protect the same from external impact, heat, vibration, etc. In the present disclosure, a battery assembly may mean a battery module or a battery pack. The battery assembly may include various control and protection systems, such as cooling systems and the like. The inner wall of the battery assembly may indicate the wall inside the assembly case.

In the present disclosure, a battery housing may mean a frame, cover, or case that surrounds a battery cell, a battery cell assembly, a battery module, or a battery pack to safely protect the battery from external stimuli.

An embodiment of the present disclosure provides a filler composition including a silicone polymer and at least one of a filling material and/or a catalyst. For example, the filler composition may include a silicone polymer and a filling material, a silicone polymer and a catalyst, or a silicone polymer, a filling material, and a catalyst.

The silicone polymer may be any one or a combination of two or more selected from the group consisting of polydimethylsiloxane (PDMS), polymethylhydrosiloxane (PMHS), and polymethylphenylsiloxane (PMPS).

Silicone polymers have the characteristic of being incompatible with water, so they do not absorb moisture. Accordingly, when a filler composition including a silicone polymer is included in a battery assembly, the insulation performance of the battery assembly may be obtained.

According to an embodiment of the present disclosure, the silicone polymer may be polydimethylsiloxane (PDMS). PDMS is an organosilicon compound and may be a compound having a structure of Si(CH₃)₂O. PDMS of the present disclosure may be a silicon compound exhibiting flame retardancy of V0 level of UL-94. The chemical formula of PDMS of the present disclosure may be CH₃[Si(CH₃)₂O]ₙOSi(CH₃)₃.

In an embodiment of the present disclosure, PDMS may include a compound represented by Chemical Formula 1 below.

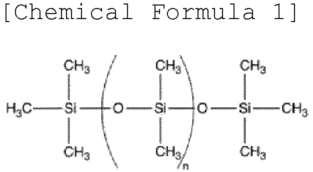

The viscosity of PDMS may be, for example, 5 cP to 40,000 cP, 10 cP to 30,000 cP, 50 to 20,000 cP, or 100 to 10,000 cP, but is not limited thereto. The weight average molecular weight of PDMS may be, for example, 100 to 10,000, 500 to 8,000, 1,000 to 7,000, or 2,000 to 6,000, but is not limited thereto. PDMS may have viscosity varying depending on the number of n in Chemical Formula 1. Here, n may be adjusted in consideration of the molecular weight and viscosity of PDMS, and for example, n may be a natural number in the range of 5 to 2,000, 10 to 1,500, 100 to 1,000, or 200 to 800, but is not limited thereto.

According to an embodiment of the present disclosure, the silicone polymer may be included in an amount of 40 to 90 wt% based on a total weight of the filler composition. Specifically, the amount of the silicone polymer based on the total weight of the filler composition may be, for example, 30 to 95 wt%, 30 to 70 wt%, 30 to 50 wt%, 40 to 90 wt%, 40 to 60 wt%, 40 to 50 wt%, 50 to 80 wt%, 50 to 70 wt%, 60 to 90 wt%, 60 to 70 wt%, 70 to 80 wt%, or 85 to 95 wt%, and may be for example 40 to 50 wt% or 50 to 70 wt%, but is not limited thereto.

PDMS may exhibit viscoelasticity, and the viscoelastic behavior may be controlled by adjusting the mixing ratio of the main material to the crosslinking agent. Specifically, the higher the crosslinking agent ratio, the stronger the crosslinking bond, which increases elasticity and reduces viscosity, but the lower the cross-linking agent ratio, the higher the viscosity.

The filling material according to an embodiment of the present disclosure may be a component having flame retardant properties and may serve to improve flame retardancy of the filler composition. The filling material according to an embodiment of the present disclosure may include a ceramic filler. According to an embodiment, the filling material optionally included in the filler composition may be included in an amount of 60 wt% or less, for example 0.01 to 60 wt%, 0.1 to 60 wt%, 0.5 to 60 wt%, 1 to 60 wt%, 5 to 60 wt%, 10 to 60 wt%, 20 to 60 wt%, 30 to 60 wt%, 40 to 60 wt% or 50 to 60 wt% based on a total weight of the filler composition, but the present disclosure is not limited thereto.

The type of ceramic filler is not limited as long as it is commonly used as a filling material in the art. The ceramic filler may be any one or a combination of two or more selected from among inorganic filling materials such as silica, quartz, magnesium carbonate, titanium oxide, zinc oxide, iron oxide, and diatomaceous earth.

In another embodiment of the present disclosure, a method for producing a cured filler composition may include injecting the filler composition into a battery assembly, and curing the filler composition within predetermined time, preferably about 25 minutes, after injection.

The filler composition according to an embodiment of the present disclosure may include the filling material, without the catalyst, does not exhibit foaming properties but may be cured within 25 minutes after being injected into the battery assembly.

Meanwhile, the filler composition according to an embodiment of the present disclosure may further include a catalyst for foaming (i.e., volume expansion) . For example, the filler composition may include the catalyst for foaming, and may exhibit foaming properties, and foaming of the filler composition may be initiated after being injected into the battery assembly. Thus, in a curing step of the filler composition, which may include the catalyst for foaming, foaming of the filler composition may be initiated in the battery assembly, and the foamed filler composition may be cured within about 25 minutes after injection. A volume of the foamed filler composition may be less than 10 times the volume of the filler composition before foaming.

The catalyst may be at least one selected from among platinum group metal-based catalysts. The platinum group metal-based catalyst refers to a catalyst comprising at least one metal or a compound thereof selected from the group consisting of platinum, ruthenium, osmium, rhodium, iridium, and palladium. For example, the platinum group metal-based catalyst may be a platinum-based catalyst.

The platinum-based catalyst may be platinum, platinum oxide, or a platinum-containing compound. The platinum-based catalyst may include, for example, platinum (Pt), a platinum-heterogeneous metal alloy, platinum black, platinum powder on silica, platinum powder on carbon, chloroplatinic acid, and the like, and the heterogeneous metal may be, for example, a type of transition metal, but the present disclosure is not limited thereto.

According to an embodiment, the catalyst optionally included in the filler composition of the present disclosure may be included in an amount of 10 wt% or less, for example 0.01 to 10 wt%, 0.1 to 10 wt%, 0.5 to 10 wt%, 1 to 10 wt% or 5 to 10 wt% based on a total weight of the filler composition, but the present disclosure is not limited thereto. When the amount of the catalyst in the filler composition falls in the above range, the filler composition may have foaming properties. The catalyst may promote a foaming process in the filler composition, causing foaming and expansion in the filler composition, thereby increasing the volume of the filler composition. A filler composition before foaming may refer to a filler composition in an initial state before the foaming process by the catalyst is initiated, and a foamed filler composition may refer to a filler composition having increased volume after completion of the foaming process. According to an embodiment, the volume of the foamed filler composition may increase by less than 10 times the volume of the filler composition before foaming. The weight range of the catalyst included in the filler composition may be appropriately selected by those skilled in the art depending on the volume of the empty space inside the battery assembly case according to various types of batteries. As a result of the addition of the catalyst, the filler composition exhibits a foaming property, such that even a small amount of the filler composition can fill substantially all of the internal voids of the battery assembly. Accordingly, the use of an excessive amount of filler composition is not required, thereby reducing the manufacturing cost of the battery assembly. Meanwhile, if the amount of the catalyst in the filler composition exceeds the above upper weight limit, the volume of the filler composition may excessively increase. In cases in which the volume of the filler composition injected into the battery assembly terrace increases excessively, deformation of the internal structure of the battery assembly or damage to the battery assembly may be caused by the filler composition.

The filler composition according to an embodiment of the present disclosure may further include a flame retardant. Here, the flame retardant may be a fiber filler. The fiber filler may be any one or a combination of two or more selected from the group consisting of glass fiber, mineral wool, ceramic wool, carbon fiber, aramid fiber, boron fiber, and flame-retardant fabric, but the present disclosure is not limited thereto. When the filler composition according to an embodiment of the present disclosure further includes the flame retardant, flame retardancy of the filler composition may be improved, and as the flame retardancy is improved, the thermal runaway and/or thermal diffusion delay effect of the battery may be further improved.

Unless otherwise specified, viscosity refers to the viscosity of the filler composition before curing. The viscosity of the filler composition according to ASTM D2196, may be 500 cP or more, preferably at room temperature. When the viscosity of the filler composition falls in the above range, flowability of the filler composition may decrease, and the filler composition may be present in the form of slime at room temperature. Also, when the filler composition is injected into a battery assembly, a phenomenon of the filler composition leaking outside the battery assembly may be prevented. Specifically, the filler composition injected into the battery assembly does not easily leak outside the battery assembly due to low flowability thereof. Accordingly, even without using an excess of filler composition, the filler composition is able to easily form a partition wall structure inside the battery assembly. Moreover, the filler composition after curing serves to form a partition wall structure inside the battery assembly and block thermal propagation between parts included in the battery assembly, so that thermal runaway and/or thermal diffusion of the battery assembly may be delayed or prevented. Meanwhile, a battery assembly can be produced that exhibits the effect of delaying or preventing thermal runaway and/or thermal diffusion, even when using a small amount of filler composition, thereby reducing production time and cost.

Unless otherwise specified, thermal conductivity refers to the thermal conductivity of the cured filler composition. Thermal conductivity of the cured filler composition 10' according to ISO-22007-2 may be less than 1.5 W/mK. According to an embodiment of the present disclosure, the silicone polymer or filling material may have at least one of flame retardancy, heat resistance, thermal insulation, or insulation performance. Since the silicone polymer or filling material included in the filler composition has at least one of the above properties, the disclosed embodiments may block the propagation of flame or high-temperature thermal energy between battery cells included in the battery assembly, so that a chain reaction of ignition occurring in the battery assembly may be prevented. In a battery assembly including the cured filler composition may have thermal conductivity of less than 1.5 W/mK, compared to a material having thermal conductivity of 1.5 W/mK or more, heat may not spread quickly due to the low thermal conductivity of the cured filler composition, thereby delaying or blocking thermal propagation between battery cells in the battery assembly. Accordingly, the battery assembly including the cured filler composition may have thermal conductivity of less than 1.5 W/mK, and may exhibit excellent effects in delaying or preventing thermal runaway and/or thermal diffusion.

Another embodiment of the present disclosure provides a battery assembly including a battery housing, at least one battery cell assembly disposed inside the battery assembly, and a cured filler composition 10' disposed between an inner wall of the battery assembly and the at least one battery cell assembly. The cured filler composition 10' may be obtained by curing the filler composition 10.

According to an embodiment of the present disclosure, the battery assembly may be a battery module 100, the battery housing may be a module case 110, and the module case 110 may include a module upper case 111, a module lower case 113, and an end plate 115. At least one battery cell assembly 200 may be located inside the battery module 100. The battery cell assembly 200 may include at least one battery cell 130. The cured filler composition may be located between the inner wall of the battery module 100 and the battery cell assembly 200. The cured filler composition may include a silicone polymer and at least one of a filling material and/or a catalyst.

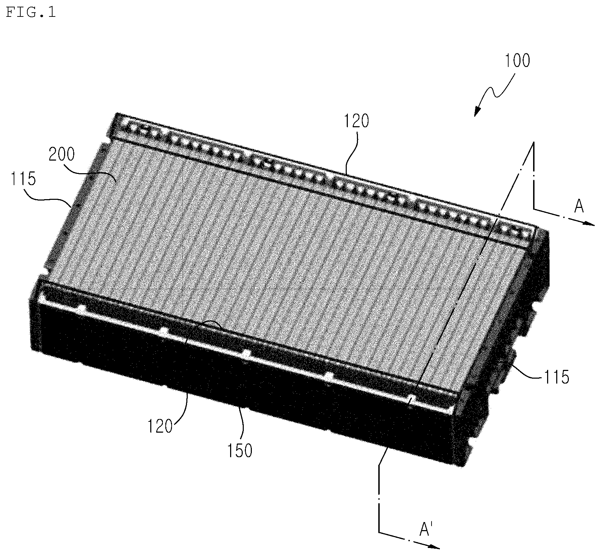

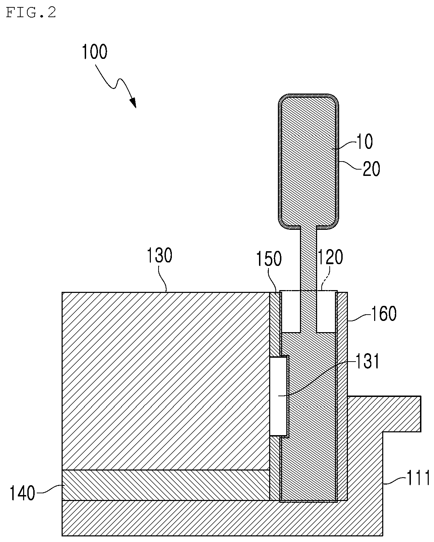

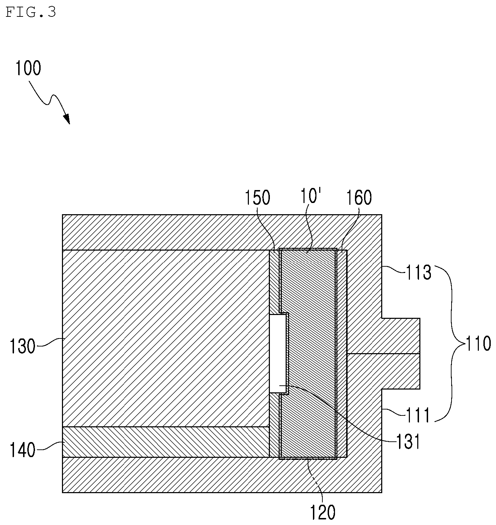

FIG. 1 is a perspective view of a partially assembled battery module 100 (for example, in a process of being assembled) according to an embodiment of the present disclosure. FIG. 2 is a cross-sectional view showing a portion of a cross-section taken along line A-A' of the battery module 100 shown in FIG. 1, and FIG. 3 is a cross-sectional view showing a state in which a filler composition 10 is injected into the partially assembled battery module 100 shown in FIG. 2 and then further assembled with a module lower case 113.

In accordance with the embodiment of FIG. 1, the battery module 100 may include a battery cell assembly 200. The battery cell assembly 200 may include at least one battery cell 130. Specifically, the battery cell assembly 200 may be formed by stacking at least one battery cell 130, and may be configured such that the lateral faces of the battery cells 130 are adjacent to each other and stacked side by side. At least one battery cell 130 may be stacked or disposed in a direction perpendicular to the width direction (A-A') that crosses the tabs protruding in different directions.

In accordance with the embodiments of FIGs. 1 to 3, the module case 110 according to an embodiment of the present disclosure may form the appearance of the battery module 100. The module case 110 may have a space formed inside and have rigidity. The module case 110 accommodates the battery cell assembly 200, and may cover at least one of the lateral faces of the battery cell assembly 200 and may also structurally fix (e.g., hold firm, provide structural support for) the battery cell assembly 200.

The module case 110 may be configured to include a module upper case 111, a module lower case 113, and an end plate 115. The module upper case 111 and the module lower case 113 may serve to cover respective upper and lower portions of the battery cell assembly 200. The end plate 115 may be disposed at each of the front and rear with respect to the direction perpendicular to the width direction of the battery module 100. Specifically, the end plate 115 may be disposed at each of the front and rear of the battery cell assembly 200 to cover the front face and the rear face of the battery cell assembly 200.

The module upper case 111 and the module lower case 113 may serve to protect respective top and bottom of the battery cell 130 and impart rigidity to the battery module 100. The end plate 115 may be coupled or fixed to at least one of the module upper case 111 or the module lower case 113. The end plate 115 may form the front face or the rear face of the battery module 100. For example, the end plate 115 may include a front cover forming the front face of the battery module 100 or a rear cover forming the rear face of the battery module 100. The end plate 115 may serve to protect the lateral face of the battery cell 130 and impart rigidity to the battery module 100.

The battery module 100 may include at least one pad 140. The pad 140 may be a foam pad. The pad 140 may serve to protect the battery cell assembly 200 and/or the battery cell 130 from external impact or vibration and absorb impact. The pad 140 may be made of a stretchable material, for example, polyurethane (PU), but the present disclosure is not limited thereto. The pad 140 may be located at the top of the battery cell 130, but the present disclosure is not limited thereto.

The battery module 100 may include a busbar 150. The busbar 150 may serve to electrically connect a plurality of battery cells 130 to each other. At least one busbar 150 may form a busbar assembly (not shown), and the busbar assembly may serve to electrically connect the battery cells 130 included in the battery cell assembly 200 to each other.

The battery module 100 may include an insulating cover 160. The insulating cover 160 may be disposed between the busbar 150 and the inner wall of the module case 110. The insulating cover 160 may be formed of a material including an electrical insulating material. For example, the insulating cover 160 may be formed of a material including plastic. The insulating cover 160 may play a role in protecting the cell tab 131 of the battery cell 130 or the electrode lead protrusion of the battery cell 130.

FIG. 2 shows a partially assembled battery module 100 according to an embodiment of the present disclosure. In assembling the battery module 100, the module upper case 111 may be assembled before the module lower case 113, and the assembling process may be performed with the top and bottom of the battery module 100 turned upside down. For example, the assembling process may be carried out in the form in which a pad 140 is located at the top of a battery cell assembly 200 including at least one battery cell 130 and/or the battery cell 130, and the module upper case 111 of the module case 110 is located at the top of the pad 140. The top of the battery cell 130 may be in contact with the pad 140, and the lateral face of the battery cell 130 may be in contact with the busbar 150.

The filler composition 10 according to an embodiment of the present disclosure may be mixed in a filler injection nozzle 20. The filler composition 10 may be injected into the battery module 100 through the filler injection nozzle 20. Specifically, the filler composition 10 injected into the battery module 100 may be located between the inner wall of the battery module 100 and the battery cell assembly 200 and/or the battery cell 130. More specifically, the filler composition 10 may be located between at least one battery cell 130 stacked in the module case 110 and the busbar 150 and the insulating cover 160. Alternatively, the filler composition 10 may be located between at least one battery cell 130 stacked in the module case 110 and the insulating cover 160. For example, the filler composition 10 may be located between the cell tab 131 of the battery cell 130 or the electrode lead protrusion of the battery cell 130 and the insulating cover 160.

According to FIG. 3, after the filler composition 10 is injected into the battery module 100, the module lower case 113 is assembled, and as the module lower case 113 is assembled, the battery cell 130 may be surrounded by the module case 110. As the battery cell 130 is surrounded by the module case 110, an empty space may be formed inside the battery module 100.

Specifically, the battery cell assembly 200 including at least one battery cell 130 and/or the battery cell 130 may be surrounded by the inner wall of the module case 110, the busbar 150, and the insulating cover 160. As such, an empty space may be formed between the inner wall of the module case 110, the busbar 150, and the insulating cover 160 and the battery cell 130. The empty space may be a module terrace 120. The module terrace 120 may indicate a space between the inner wall of the battery module 100 and the battery cell assembly 200.

The battery module 100 may include the module terrace 120, and the cured filler composition 10' may be located (for example, disposed, injected) in the module terrace 120. The module terrace 120 may indicate an empty space formed inside the battery module 100. Specifically, the module terrace 120 may be a space formed between at least one battery cell 130 stacked in the module case 110 and the insulating cover 160. Also, the module terrace 120 may be a space between the cell tab 131 or electrode lead protrusion of at least one battery cell 130 included in the at least one battery cell assembly 200 and the insulating cover 160.

The empty space inside the module terrace 120 may be filled by injecting the filler composition 10 into the module terrace 120 through the filler injection nozzle 20. The filler composition 10 may be cured or may be foamed and then cured inside the battery module 100, and the empty space inside the battery module 100 may be completely filled with the cured filler composition 10'.

A partition wall structure may be formed by the cured filler composition 10' in the module terrace 120. Since the partition wall structure is formed from the cured filler composition 10' in the module terrace 120, thermal propagation between internal parts of the battery module 100 may be blocked by the cured filler composition 10', and thus thermal runaway and/or thermal diffusion in the battery module 100 may be delayed or prevented.

The filler composition 10 according to an embodiment of the present disclosure may have viscosity, according to ASTM D2196, increased to 500 cP or more after being injected into the battery module 100. The viscosity of the filler composition 10 disposed inside the battery module 100 may be 500 cP or more. When the viscosity of the filler composition is 500 cP or more, flowability of the filler composition may decrease, and the filler composition may be prevented from leaking outside the battery module (leakage). Meanwhile, the filler composition 10 is foamed due to the catalyst included in the filler composition 10, and the volume of the cured filler composition after foaming may be 1 to less than 10 times the volume of the filler composition before foaming. Moreover, as the filler composition is foamed, a large number of bubbles may be generated, and accordingly, the cured filler composition after foaming may include a large number of pores.

Meanwhile, the filler composition may be mixed in the filler injection nozzle 20 before being injected into the battery module 100. The curing time of the filler composition may be controlled depending on the mixing reaction rate in the filler injection nozzle 20. For example, the curing time of the filler composition may be reduced with an increase in the number of times the filler composition is mixed. For example, the filler composition including the catalyst may have foaming properties, and a volume of the foamed filler composition may be 1 to less than 10 times the volume of the filler composition before foaming. After the filler composition including the catalyst is injected into the battery module 100, a foaming process is initiated, and the foamed filler composition may be cured within about 25 minutes. Meanwhile, the filler composition not including the catalyst may be cured within about 25 minutes after being injected into the battery module 100.

In addition, the present disclosure provides a battery pack.

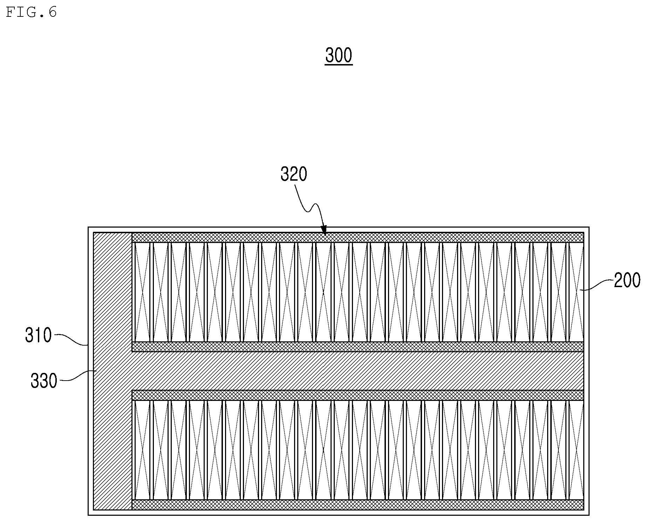

FIG. 6 shows a battery pack 300 according to an embodiment of the present disclosure.

The battery assembly according to an embodiment of the present disclosure may be a battery pack 300. The battery pack 300 may include a battery housing, at least one battery cell assembly, and a cured filler composition 10'. The cured filler composition 10' may be located (for example, disposed, injected) among (for example, within the space between) the inner wall of the battery pack 300, the partition wall 330, and the battery cell assembly 200.

The battery housing may include a pack case 310 and at least one partition wall 330. The pack case 310 may include a pack upper case and a pack lower case. The pack case 310 may form the appearance of the battery pack 300. At least one partition wall 330 may be included in the pack case 310 and may be surrounded by the pack case 310. The partition wall 330 may serve to partition the inside of the pack case 310 into at least one space. The battery cell assembly 200 may be accommodated in each space inside the pack case 310 partitioned by the partition wall 330. The partition wall 330 provided in the pack case 310 may serve to separate a plurality of battery cell assemblies from each other so that one or more battery cell assemblies included in the battery pack 300 do not collide with each other inside the battery pack 300. The partition wall 330 may be formed of a material capable of delaying or blocking heat transfer or thermal propagation.

A battery pack 300 according to an embodiment of the present disclosure may include at least one battery cell assembly. Here, at least one battery cell assembly may be the battery cell assembly 200 described above. Specifically, at least one battery cell assembly 200 may be surrounded by an inner wall of a pack case 310, a partition wall 330, a busbar assembly, and an insulating cover. As such, an empty space may be formed between the inner wall of the pack case 310, the partition wall 330, the busbar assembly, and the insulating cover and the battery cell assembly 200. The empty space may be a pack terrace 320.

A battery pack 300 according to another embodiment of the present disclosure may include a pack terrace 320. The pack terrace 320 may indicate an empty space formed inside the battery pack 300. Specifically, the pack terrace 320 may be a space formed between at least one battery cell assembly 200 included in a pack case 310 and a partition wall 330. The pack terrace 320 may be a space between the inner wall of the battery pack 300 and the partition wall 330 and the battery cell assembly 200. Also, the pack terrace 320 may be a space between the battery cell assembly 200 and the insulating cover. Alternatively, the pack terrace 320 may be a space between the electrode lead protrusion of at least one battery cell included in the battery cell assembly 200 and the insulating cover or the partition wall 330. Meanwhile, the cured filler composition 10' may be located (for example, disposed, injected) in the pack terrace 320.

The battery pack 300 according to an embodiment of the present disclosure may include a cured filler composition. The cured filler composition may be obtained by curing the filler composition described above. After the filler composition is injected into the battery pack 300, assembling of the pack case 310 is completed and the battery cell assembly 200 may be surrounded by the pack case 310. An empty space may be formed inside the battery pack 300 as the battery cell assembly 200 is surrounded by the pack case 310. The empty space may be the pack terrace 320.

The empty space inside the pack terrace 320 may be filled by injecting the filler composition into the pack terrace 320 through the filler injection nozzle. The filler composition may be cured or may be foamed and then cured inside the battery pack 300, and the empty space inside the battery pack 300 may be completely filled with the cured filler composition.

A partition wall structure may be formed by curing or foaming and curing the filler composition in the pack terrace 320. Since the partition wall structure is formed from the cured filler composition in the pack terrace 320, thermal propagation between internal parts of the battery pack 300 may be blocked by the cured filler composition, and thus thermal runaway and/or thermal diffusion in the battery pack 300 may be delayed or prevented.

The battery pack (not shown) according to another embodiment of the present disclosure may include at least one battery module. Here, at least one battery module may be the battery module (e.g., battery module 100) described above. The battery pack may be formed by housing at least one battery module in a pack housing (not shown).

In another embodiment, a vehicle is provided, the vehicle may include at least one battery module or battery pack. The at least one battery module or battery pack may be the battery module (e.g., battery module 100) or the battery pack as described herein, which may include the cured filler composition. As described above, the cured filler composition may include a silicone polymer and at least one of a filling material and/or a catalyst, in which the silicone polymer includes any one, or a combination of two or more selected from a group consisting of polydimethylsiloxane, polymethylhydrosiloxane, and polymethylphenylsiloxane.

In addition, a vehicle according to an embodiment of the present disclosure may be an electric vehicle and may include at least one of the battery cell, battery cell assembly, battery module, or battery pack. Moreover, at least one of the battery cell, battery cell assembly, battery module, or battery pack may be included in other systems, instruments, devices and/or facilities including energy storage devices or secondary batteries in addition to the vehicle.

To prepare the filler composition according to an embodiment of the present disclosure, a silicone polymer, a filling material, and a catalyst were mixed in weight ranges according to [Table 1] below. The viscosity of the filler composition was measured in accordance with ASTM D2196, using a Brookfield rotational viscometer (spindle No. 3, 20 rpm) at 25 ± 1°C. The sample was measured before curing, immediately after mixing. The reported viscosity value represents the average of three independent measurements. The thermal conductivity (W/mK) of the cured filler composition was measured in accordance with ISO 22007-2 at 25 ± 1°C under ambient pressure. The cured sample was prepared in a disk shape (diameter 30mm, thickness 5mm) by curing the composition for 24 hours at 80°C. The measurement was repeated three times, and the average value was reported. The standard deviation was within ±0.05 W/mK. The filler compositions of Examples 1 to 4, each having a viscosity of 500 cP or more, exhibited low flowability due to high viscosity, thereby preventing leakage from the battery module. The cured filler compositions of Examples 1 to 4, each having a thermal conductivity of less than 1.5 W/mK, suppressed thermal propagation in the battery module due to their low thermal conductivity. Furthermore, the filler composition of Example 2 or Example 4 included the catalyst, confirming foaming properties of less than 10 times the volume of the filler composition before foaming.

**[Table 1]**

| Example | Filler composition (wt%) | | | Properties of filler composition | | |
|---|---|---|---|---|---|---|
| | Silicone polymer | Filling material | Catalyst | Viscosity | Increase in volume (relative to volume before foaming) | Thermal conductivity |
| 1 | 40% | 60% | 0% | 500 cP or more | 1 times or more | Less than 1.5 W/mK |
| 2 | 40% | 50% | 10% | 500 cP or more | Less than 10 times | Less than 1.5 W/mK |
| 3 | 90% | 10% | 0% | 500 cP or more | 1 times or more | Less than 1.5 W/mK |
| 4 | 90% | 0% | 10% | 500 cP or more | Less than 10 times | Less than 1.5 W/mK |

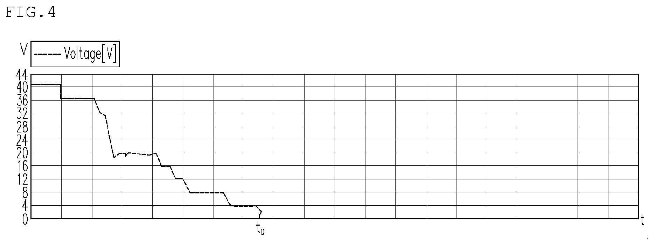

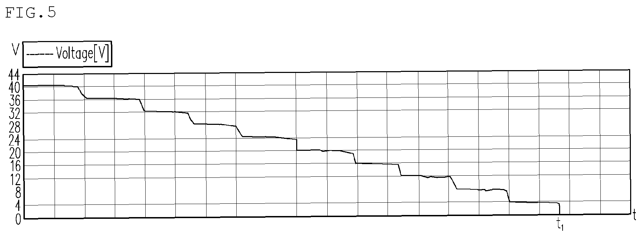

FIGs. 4 and 5 are graphs showing the thermal runaway delay effect of a battery module without injecting a filler composition and a battery module with the cured filler composition of Example 2 disposed in the module terrace, respectively. Specifically, the graphs in FIGS. 4 and 5 represent voltage curves over time for testing thermal runaway of a battery cell. Thermal runaway typically occurs after a sudden voltage drop in the battery cell. When the time for the voltage of the battery module without injecting the filler composition according to an embodiment of the present disclosure to completely decrease is referred to as t₀ as shown in FIG. 4, the time (t₁) for the voltage of the battery module with the cured filler composition according to an embodiment of the present disclosure (Example 2) to completely decrease as shown in FIG. 5 was determined to be at least about 2.3 times t₀ (2.3 t₀ or more). Thereby, it can be confirmed that the battery module including the cured filler composition according to an embodiment of the present disclosure exhibited excellent thermal runaway and/or thermal diffusion delay effects. Therefore, it can be confirmed that the cured filler composition according to an embodiment of the present disclosure was capable of improving the thermal runaway and/or thermal diffusion delay performance of a battery module.

As is apparent from the foregoing, according to an embodiment of the present disclosure, thermal runaway and/or thermal diffusion delay performance of a battery assembly can be improved.

According to an embodiment of the present disclosure, insulation performance of a battery assembly can be improved.

According to an embodiment of the present disclosure, the production time and cost of a battery assembly can be reduced.

While the present disclosure has been described with respect to the specific embodiments, it will be apparent to those skilled in the art that various changes and modifications may be made without departing from the spirit and scope of the invention as defined in the following claims.

Some of the aspects of the present disclosure are as follows:
Aspect 1: A filler composition (10) comprising:
   a silicone polymer; and at least one of a filling material and/or a catalyst, wherein the silicone polymer comprises any one, or a combination of two or more selected from a group consisting of polydimethylsiloxane, polymethylhydrosiloxane, and polymethylphenylsiloxane.
Aspect 2: The filler composition (10) of aspect 1, wherein the filling material comprises a ceramic filler.
Aspect 3: The filler composition (10) of aspect 1 or 2, wherein the catalyst comprises at least one selected from among platinum group metal-based catalysts.
Aspect 4: The filler composition (10) of any one of the preceding aspects, wherein an amount of the silicone polymer is 40 to 90 wt% based on a total weight of the filler composition.
Aspect 5: The filler composition (10) of any one of the preceding aspects, wherein an amount of the filling material is 60 wt% or less based on a total weight of the filler composition.
Aspect 6: The filler composition (10) of any one of the preceding aspects, wherein an amount of the catalyst is 10 wt% or less based on a total weight of the filler composition.
Aspect 7: The filler composition (10) of any one of the preceding aspects, wherein the catalyst is for foaming.
Aspect 8: The filler composition (10) of any one of the preceding aspects, further comprising a flame retardant, wherein the flame retardant is a fiber filler.
Aspect 9: The filler composition (10) of any one of the preceding aspects, wherein viscosity of the filler composition according to ASTM D1296 is 500 cP or more.
Aspect 10: A method for producing a cured filler composition (10'), comprising: injecting the filler composition (10) of any one of aspects 1 to 9 into a battery assembly, and curing the filler composition (10) within predetermined time after injection.
Aspect 11: The method of aspect 10, wherein the curing step comprising: foaming of the filler composition (10) is initiated in the battery assembly, wherein the filler composition (10) comprises the catalyst for foaming, wherein a volume of the filler composition after foaming is less than 10 times a volume of the filler composition before foaming, and curing the foamed filler composition within 25 minutes after injection.
Aspect 12: A battery assembly comprising: a battery housing; at least one battery cell assembly (200) disposed inside the battery assembly; and a cured filler composition (10') disposed between an inner wall of the battery assembly and the at least one battery cell assembly (200), wherein the cured filler composition according to any one of aspects 1 to 9.
Aspect 13: The battery assembly of aspect 12, wherein, when the battery assembly is a battery module (100): the at least one battery cell assembly (200) is disposed inside the battery module (100), the battery housing is a module case (110) comprising a module upper case (111), a module lower case (113), and an end plate (115), the battery module (100) comprises a module terrace (120), the cured filler composition (10') is disposed in the module terrace (120), and the module terrace (120) is a space between an inner wall of the battery module (100) and the battery cell assembly (200), or a space between a cell tab (131) or an electrode lead protrusion of at least one battery cell (130) included in the at least one battery cell assembly (200) and insulating cover (160).
Aspect 14: The battery assembly of aspect 12, wherein, when the battery assembly is a battery pack (300): the at least one battery cell assembly (200) is disposed inside the battery pack (300), the battery housing comprises a pack case (310) comprising a pack upper case and a pack lower case and at least one partition wall (330), the battery pack (300) comprises a pack terrace (320), the cured filler composition (10') is disposed in the pack terrace (320), and the pack terrace (320) is a space among the inner wall of the battery pack (300), the partition wall (330), and the at least one battery cell assembly (200) or a space between an electrode lead protrusion of at least one battery cell included in the at least one battery cell assembly (200) and an insulating cover or the partition wall (330).
Aspect 15: The battery assembly in any one of aspects 12 to 14, wherein thermal conductivity of the cured filler composition (10') according to ISO-22007-2 is less than 1.5 W/mK.

The above description is only an example to which the principle of the present disclosure is applied, and other configurations may be further included without departing from the scope of the present disclosure.

## Claims

1. A filler composition (10) comprising:
a silicone polymer; and
at least one of a filling material or a catalyst,
wherein the silicone polymer comprises any one, or a combination of two or more selected from a group consisting of polydimethylsiloxane, polymethylhydrosiloxane, and polymethylphenylsiloxane.

2. The filler composition (10) of claim 1, wherein the filling material comprises a ceramic filler.

3. The filler composition (10) of claim 1 or 2, wherein the catalyst comprises at least one selected from among platinum group metal-based catalysts.

4. The filler composition (10) of any one of the preceding claims, wherein an amount of the silicone polymer is 40 to 90 wt% based on a total weight of the filler composition.

5. The filler composition (10) of any one of the preceding claims, wherein an amount of the filling material is 60 wt% or less based on a total weight of the filler composition.

6. The filler composition (10) of any one of the preceding claims, wherein an amount of the catalyst is 10 wt% or less based on a total weight of the filler composition.

7. The filler composition (10) of any one of the preceding claims, wherein the catalyst is for foaming.

8. The filler composition (10) of any one of the preceding claims, further comprising a flame retardant, wherein the flame retardant is a fiber filler.

9. The filler composition (10) of any one of the preceding claims, wherein viscosity of the filler composition according to ASTM D2196 is 500 cP or more.

10. A method for producing a cured filler composition (10'), comprising:
injecting the filler composition (10) of any one of claims 1 to 9into a battery assembly, and
curing the filler composition (10) within predetermined time after injection.

11. The method of claim 10,
wherein the curing step comprising:
foaming of the filler composition (10) is initiated in the battery assembly,
wherein the filler composition (10) comprises the catalyst for foaming,
wherein a volume of the filler composition after foaming is less than 10 times a volume of the filler composition before foaming, and
curing the foamed filler composition within 25 minutes after injection.

12. A battery assembly comprising:
a battery housing;
at least one battery cell assembly (200) disposed inside the battery assembly; and
a cured filler composition (10') disposed between an inner wall of the battery assembly and the at least one battery cell assembly (200),
wherein the cured filler composition (10') is obtained by curing the filler composition according to any one of claims 1 to 9.

13. The battery assembly of claim 12, wherein,
when the battery assembly is a battery module (100):
the at least one battery cell assembly (200) is disposed inside the battery module (100);
the battery housing is a module case (110) comprising a module upper case (111), a module lower case (113), and an end plate (115);
the battery module (100) comprises a module terrace (120);
the cured filler composition (10') is disposed in the module terrace (120); and
the module terrace (120) is a space between an inner wall of the battery module (100) and the battery cell assembly (200), or a space between a cell tab (131) or an electrode lead protrusion of at least one battery cell (130) included in the at least one battery cell assembly (200) and insulating cover (160).

14. The battery assembly of claim 12, wherein,
the battery assembly is a battery pack (300):
the at least one battery cell assembly (200) is disposed inside the battery pack (300);
the battery housing comprises a pack case (310) comprising a pack upper case and a pack lower case and at least one partition wall (330);
the battery pack (300) comprises a pack terrace (320);
the cured filler composition (10') is disposed in the pack terrace (320); and
the pack terrace (320) is a space among the inner wall of the battery pack (300), the partition wall (330), and the at least one battery cell assembly (200) or a space between an electrode lead protrusion of at least one battery cell included in the at least one battery cell assembly (200) and an insulating cover or the partition wall (330).

15. The battery assembly in any one of claims 12 to 14,
wherein thermal conductivity of the cured filler composition (10') according to ISO-22007-2 is less than 1.5 W/mK.
